(19) Europäisches Patentamt
European Patent Office
Office européen des brevets

(11) **EP 3 612 398 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(21) Anmeldenummer: **18720517.4**

(22) Anmeldetag: **17.04.2018**

(51) Int Cl.:
*B42D 25/382* (2014.01)     *B42D 25/24* (2014.01)
*B42D 25/29* (2014.01)     *C09K 11/08* (2006.01)
*C09K 11/77* (2006.01)     *G07D 7/1205* (2016.01)

(86) Internationale Anmeldenummer:
**PCT/EP2018/000207**

(87) Internationale Veröffentlichungsnummer:
**WO 2018/192679 (25.10.2018 Gazette 2018/43)**

(54) **WERTDOKUMENT MIT SICHERHEITSMARKIERUNG MIT VARIIERENDER ABKLINGZEIT UND VERFAHREN ZUM IDENTIFIZIEREN DER SICHERHEITSMARKIERUNG**

VALUE DOCUMENT HAVING SECURITY MARKING WITH VARYING DECAY TIME AND METHOD FOR IDENTIFYING THE SECURITY MARKING

DOCUMENT DE VALEUR MUNI D'UN MARQUAGE DE SÉCURITÉ À TEMPS D'EXTINCTION VARIABLE ET PROCÉDÉ PERMETTANT D'IDENTIFIER LE MARQUAGE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2017 DE 102017003746**

(43) Veröffentlichungstag der Anmeldung:
**26.02.2020 Patentblatt 2020/09**

(73) Patentinhaber: **Giesecke+Devrient Currency Technology GmbH**
**81677 München (DE)**

(72) Erfinder: **KECHT, Johann**
**81677 München (DE)**

(56) Entgegenhaltungen:
**WO-A1-2012/003854     WO-A1-2013/033009**
**WO-A1-2014/095055     US-B2- 9 046 486**

**Beschreibung**

Die vorliegende Erfindung liegt auf dem technischen Gebiet der Herstellung und Überprüfung von Wertdokumenten und betrifft ein Wertdokument mit einer Sicherheitsmarkierung mit einer spektral kontinuierlich variierenden Abklingzeit, sowie ein Verfahren zur Identifikation derselben.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandensein ein Indiz für die Echtheit, d.h. die Herstellung durch eine dazu befugte Stelle, ist. Wichtige Beispiele für solche Wertdokumente sind Chipkarten, Coupons, Gutscheine, Schecks und insbesondere Banknoten.

Wertdokumente werden in aller Regel durch eine spezielle Kennzeichnung gegen eine unerwünschte und gegebenenfalls gesetzwidrige Vervielfältigung geschützt. Es ist seit langem bekannt, Wertdokumente zu diesem Zweck mit Lumineszenzstoffen zu versehen, die ein spezifisches Emissionsverhalten aufweisen. Bekannt ist insbesondere die Verwendung von Sicherheitsmerkmalen aus einer Kombination verschiedener Lumineszenzstoffe und die Bestimmung und Auswertung der Lumineszenz-Abklingzeit zur Prüfung von Wertdokumenten.

Mit den im Stand der Technik bekannten Lumineszenzstoffen und Auswerteverfahren kann zwar eine befriedigende fälschungssichere Kennzeichnung von Wertdokumenten erreicht werden, jedoch können bei Sicherheitsmerkmalen mit einer Kombination aus Lumineszenzstoffen, deren Emissionen spektral nicht überlappen, die spektralen Eigenschaften der einzelnen Lumineszenzstoffe separat analysiert werden, so dass kein besonders hoher Schutz gegen Analyse und Nachahmung des Sicherheitsmerkmals erreicht wird. Durch die Verwendung von Lumineszenzstoffen, deren Emissionen partiell oder vollständig überlappen, wird eine Analyse bereits deutlich erschwert, wobei jedoch auch hier die Möglichkeit besteht, durch eine Kombination von Lumineszenzstoffen mit anderen spektralen Eigenschaften, z.B. anderen Emissionsbandenlagen, ein in Summe ähnliches Emissionsspektrum zu erzeugen. Zudem ist es gemäß dem Stand der Technik in der Praxis erforderlich, dass die Lumineszenzstoffe eine identische Emissionswellenlänge oder zumindest nur gering unterschiedliche Emissionswellenlängen besitzen, da die Emissionen der Lumineszenzstoffe in Summe wie die Emission eines einzigen Lumineszenzstoffs wirken müssen. Dies bringt jedoch eine erhebliche Einschränkung hinsichtlich der Auswahl an Lumineszenzstoffen mit sich, da Lumineszenzstoffe mit deutlich unterschiedlichen Emissionen sowie in verschiedene Spektralbereiche trennbare Emissionen mit geringer Überlappung nicht eingesetzt und ausgewertet werden können. Infolge der Begrenzung der zur Verfügung stehenden kombinatorischen Vielfalt und der damit einer gehenden eingeschränkten Variabilität der Kennzeichnung kann sich eine Verminderung der Fälschungssicherheit ergeben.

Soll die Lumineszenz-Abklingzeit einer Stoff-Mischung gemäß dem Stand der Technik ausgewertet werden, wird die Stoffauswahl weiter eingeschränkt, da die individuellen Abklingzeiten in einem geeigneten Verhältnis zueinander stehen müssen. Zudem ist eine genaue und eindeutige Analyse von multi-exponentiellen Abklingkurven technisch sehr aufwändig, was in zeitkritischen Situationen, wie beispielsweise auf schnell laufenden Banknotenbearbeitungsmaschinen, oder im Falle von Produktionsschwankungen nachteilig ist, um derartige Sicherheitsmerkmale zuverlässig zu bewerten.

Beispielsweise zeigt die Druckschrift US 7762468 B2 ein Authentifizierungsverfahren, bei dem eine Kombination von zwei Lumineszenzstoffen mit unterschiedlichen Abklingzeiten verwendet wird. Hierbei wird ein langsamer abklingender Lumineszenzstoff erst dann erfasst, wenn die Lumineszenz eines schneller abklingenden Lumineszenzstoffs bereits abgeklungen ist. Auch die Druckschrift US 2006118741 A1 beschreibt eine Sicherheitsmarkierung mit einer Kombination von zwei Lumineszenzstoffen, deren Intensitäten individuell überprüft werden.

Die Druckschrift US 9046486 B2 offenbart eine Sicherheitsmarkierung basierend auf einer Kombination von Lumineszenzstoffen mit einem unterschiedlichen Abklingverhalten, welche in Summe eine Emission mit multiexponentiellem Abklingverhalten erzeugen. Mit Hilfe einer geeigneten Anpassung werden sowohl die Amplituden als auch die Abklingzeiten der Abklingkurven bestimmt.

Die Druckschrift WO 2011106522 A1 beschreibt eine Sicherheitsmarkierung mit einer Kombination aus zwei organischen Lumineszenzstoffen mit überlappenden Emissionsspektren und unterschiedlichen Abklingzeiten. Nachteilig bei der Verwendung organischer Farbstoff-Moleküle ist unter anderem deren relativ geringe Beständigkeit gegenüber chemischen und physikalischen Einflüssen. Zudem weisen sie mit dem Auge erkennbare Emissionen im sichtbaren Spektralbereich auf.

Die WO 2013/033009 A1 beschreibt einen Artikel mit zerstreuten Emissionsmerkmalen.

Die WO 2014/095055 A1 beschreibt einen Sensor zum Prüfen eines Wertdokuments, das relativ zum Sensor bewegt wird. Der Sensor ist so ausgelegt, dass er die Lumineszenz des wertvollen Dokuments in zwei verschiedenen Spektralbereichen gleichzeitig an derselben Erfassungsstelle erfasst. Die beiden in unterschiedlichen Spektralbereichen erfassten Intensitätskurven über der Zeit der ersten und zweiten Lumineszenz werden relativ zueinander ausgewertet. Die Bewegungseffekte, die beide Intensitätskurven gleich oder zumindest sehr ähnlich verzerren, werden dadurch rechnerisch eliminiert.

Die WO 2012/003854 A1 offenbart ein Sicherheitsmerkmal mit einem Lumineszenzpigment, das ein mit einem Leuchtstoff dotiertes Wirtsgitter aufweist, das zur Emission von Lumineszenzlicht optisch angeregt wird. Das Lumineszenzlicht des Lumineszenzpigments weist ein Lumineszenzspektrum mit einem ersten Lumineszenzpeak und einem zweiten Lumineszenzpeak auf, wobei die Intensität jedes Peaks von einer Substanzbestandteilsmenge x des Luminophors im Lumineszenzpigment abhängt.

Demgegenüber besteht die Aufgabe der vorliegenden Erfindung darin, eine zuverlässige Kennzeichnung eines Wertdokuments mit Lumineszenzstoffen mit partiell überlappenden Emissionen zu ermöglichen, die durch eine Kopplung der Merkmalseigenschaften an die Messmethode eine erhöhte Fälschungssicherheit bietet. Zudem soll die Verwendung einer Vielzahl verschiedener lumineszierender Substanzen möglich sein und die Identifikation des Sicherheitsmerkmals soll auf einfache und schnelle Weise erfolgen. Diese und weitere Aufgaben werden nach dem Vorschlag der Erfindung durch ein Wertdokument mit einer Sicherheitsmarkierung und ein Verfahren zur Identifikation derselben mit den Merkmalen der nebengeordneten Patentansprüche gelöst. Vorteilhafte Ausgestaltungen der Erfindung sind durch die Merkmale der abhängigen Ansprüche angegeben.

Ein erfindungsgemäßes Wertdokument mit einer Sicherheitsmarkierung (Kennzeichnung) ist in Anspruch 1 definiert. Unter dem Begriff "Wertdokument" sind im Rahmen der vorliegenden Erfindung jegliche, gegen eine unerwünschte bzw. rechtswidrige Vervielfältigung zu schützende Gegenstände zu verstehen, beispielsweise Banknoten, Schecks, Aktien, Wertmarken, Ausweise, Kreditkarten und Pässe sowie Etiketten, Siegel, Verpackungen oder andere Gegenstände für die Wertsicherung. Die Sicherheitsmarkierung des erfindungsgemäßen Wertdokuments kann zumindest einer (wahlfrei) definierbaren Eigenschaft des Wertdokuments zugeordnet werden, wobei die Eigenschaft bei Identifikation (d.h. Vorliegen) der Sicherheitsmarkierung gegeben und bei Nicht-Identifikation (d.h. Fehlen) der Sicherheitsmarkierung nicht gegeben ist. Beispielsweise kann die Sicherheitsmarkierung als Echtheitsmarkierung bzw. Echtheitsmerkmal der Eigenschaft "Echtheit" zugeordnet sein, um Wertdokumente entweder als echt oder gefälscht zu erkennen. Eine weitere Eigenschaft wäre beispielsweise die Zuordnung von Wertdokumenten durch die Sicherheitsmarkierung zu einer bestimmten Klasse oder Gruppe, wie etwa ein Banknotenwert oder ein Herstellungsland von Banknoten.

Erfindungsgemäß ist die Sicherheitsmarkierung des Wertdokuments in Form einer Kombination von mindestens zwei Lumineszenzstoffen ausgebildet. In der Sicherheitsmarkierung sind die mindestens zwei Lumineszenzstoffe in einem definierbaren bzw. definierten Mengenverhältnis in Kombination (vorzugsweise in Form einer Mischung) enthalten. Dies bedeutet, dass jeder Lumineszenzstoff in einem definierbaren bzw. definierten relativen Mengenanteil, bezogen auf die Gesamtmenge der Lumineszenzstoffe, in der Sicherheitsmarkierung vorhanden ist. Die Sicherheitsmarkierung kann somit in eindeutiger Weise identifiziert werden.

Die Lumineszenzstoffe können auf verschiedene Art und Weise in das Wertdokument ein- oder am Wertdokument angebracht werden. Sie können beispielsweise einer Papier- oder Kunststoffmasse zum Herstellen des Wertdokuments oder einer Druckfarbe zum Bedrucken des Wertdokuments zugemischt werden. Denkbar ist auch, die Lumineszenzstoffe als beispielsweise unsichtbare Beschichtung auf dem Wertdokument vorzusehen. Die Lumineszenzstoffe können auch auf oder in einem beispielsweise aus Kunststoff bestehenden Trägermaterial vorgesehen sein, das in eine Papier- oder Kunststoffmasse zum Herstellen des Wertdokuments eingebettet ist. Das Trägermaterial kann beispielsweise in Form eines Sicherheits- oder Kennfadens, einer Melierfaser oder Planchette ausgebildet sein. Das Trägermaterial kann auch, beispielsweise in Form einer Plakette, an dem Wertdokument angebracht sein, beispielsweise um eine Produktsicherungsmaßnahme vorzunehmen. Grundsätzlich ist jede beliebige Formgebung des Trägermaterials möglich.

Die Lumineszenzstoffe der Sicherheitsmarkierung des erfindungsgemäßen Wertdokuments weisen individuelle Emissionsspektren auf, die sich in einem Wellenlängenbereich (im Weiteren als Überlappbereich bezeichnet) ergänzen. Die beiden Emissionsspektren überlappen dabei teilweise, jedoch nicht vollständig. Abhängig von seinem relativen Mengenanteil trägt jeder Lumineszenzstoff im Überlappbereich mit der Intensität seiner emittierten Lumineszenzstrahlung zur Gesamtintensität der Sicherheitsmarkierung bei. Der Begriff "Gesamtintensität" bezieht sich hier und im Weiteren auf eine summarische Intensität, der durch einen (selben) Anregungspuls angeregten und zu einem selben Zeitpunkt bei einer bestimmten Wellenlänge oder in einem bestimmten Wellenlängenbereich erfassten Lumineszenzstrahlungen der in Kombination in der Sicherheitsmarkierung enthaltenen Lumineszenzstoffe. In entsprechender Weise bezieht sich der Begriff "Gesamtabklingzeit" auf die Abklingzeit der Gesamtintensität, im Unterschied zu einer individuellen Abklingzeit der individuellen Intensität eines Lumineszenzstoffs.

Die Begriffe "integrierte Gesamtintensität" und "integrierte individuelle Intensität" beziehen sich auf das spektrale Integral der jeweiligen Intensität über einen angegebenen Bereich.

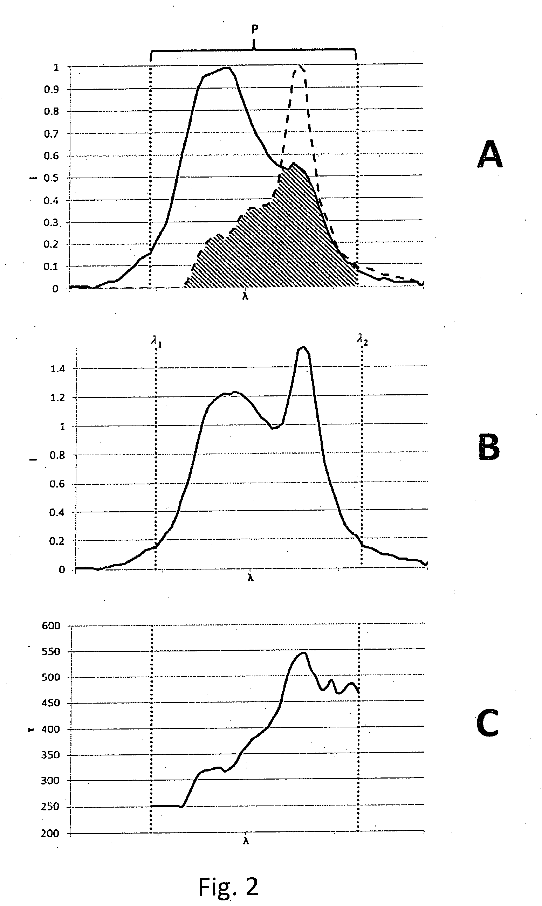

Bei einer Messung der Gesamtintensität mit einer Auflösung von höchstens 20 nm, das heißt z. B. mit einer Auflösung von 20 nm, von 30 nm oder von 50 nm, ergibt sich ein ununterbrochener "primärer Emissionsbereich" P, der wie folgt definiert ist (siehe Figur 2, Bereich zwischen den gepunkteten Markierungslinien) :

- Das Maximum der Gesamtintensität befindet sich im primären Emissionsbereich
- Der primäre Emissionsbereich ist der größte zusammenhängende Wellenlängenbereich, in dem die Gesamtintensität 10% des Maximums nicht unterschreitet.

Hintergrund dieser Definition ist, dass für ein effizientes, schnell auslesbares Sicherheitsmerkmal notwendigerweise die Hauptemission ausgewertet werden muss und nicht ausschließlich z.B. eine eventuell auch vorhandene schwächere Nebenemission. Weiterhin führt die Bestimmung der Abklingzeit in wenig intensiven Bereichen zu einer höheren Messungenauigkeit bzw. zu einem erhöhten Signal-zu-Rausch-Verhältnis, so dass für diese Teilbereiche bei einer schnellen Messung kein zuverlässiger Wert für die Abklingzeit ermittelt werden kann. Bei genügend Zeit- und Messaufwand können jedoch optional auch Teilbereiche jenseits des primären Emissionsbereichs wie schwach intensive Bereiche und Nebenbanden zusätzlich mit ausgewertet werden.

Der "Überlappungsgrad" von zwei Lumineszenzemissionen von zwei voneinander verschiedenen Lumineszenzstoffen im primären Emissionsbereich ist wie folgt definiert:

Zunächst werden die individuellen (spektralen) Intensitäten I'(x) und J'(x) deren Kurven sich ergeben, wenn die individuellen Intensitäten I' bzw. J' gegen die Wellenlänge (x) aufgetragen werden, auf den gleichen Flächeninhalt normiert. D.h.

$$I(x) = I'(x) / \int_{\lambda 1}^{\lambda 2} I'(x)dx, \quad J(x) = J'(x) / \int_{\lambda 1}^{\lambda 2} J'(x)dx.$$

In diesem Fall wurde z.B. auf den Flächeninhalt 1 normiert. $\lambda_1$ ist die untere Grenzwellenlänge des primären Emissionsbereichs und $\lambda_2$ ist die obere Grenzwellenlänge des primären Emissionsbereichs.

Der Überlappungsgrad ist dann durch folgende Formel definiert:

$$Überlappungsgrad = \frac{2 \int_{\lambda 1}^{\lambda 2} I(x) \cdot J(x) \, dx}{\int_{\lambda 1}^{\lambda 2} I(x) \, dx + \int_{\lambda 1}^{\lambda 2} J(x) \, dx}$$

Er bezeichnet den prozentualen Anteil an überlappender Fläche innerhalb des primären Emissionsbereiches, wenn die Spektren der einzelnen Emissionen der jeweiligen Lumineszenzstoffe übereinandergelegt werden (schraffierter Bereich in Figur 2A).

Der Überlappungsgrad der Emission zweier Lumineszenzstoffe ist eine von der relativen Intensität und Konzentration der Lumineszenzstoffe unabhängige Kenngröße, die sich allein auf die formabhängige Überlappung der jeweiligen Emissionsspektren bezieht. Zur Bestimmung des Überlappungsgrades werden bei Raumtemperatur gemessene Emissionskurven herangezogen, welche mit einer Detektorauflösung von mehr als 5 nm und weniger als 100 nm, bevorzugt mehr als 10 nm und weniger als 50 nm, besonders bevorzugt mehr als 15 und weniger als 30 nm, gemessen wurden.

Erfindungsgemäß sind die Lumineszenzstoffe so ausgebildet, dass die individuellen Emissionsspektren der Lumineszenzstoffe einen Überlappungsgrad von weniger als 80%, bevorzugt weniger als 65%, besonders bevorzugt weniger als 50%, sowie einen Überlappungsgrad von mehr als 5%, bevorzugt mehr als 10%, besonders bevorzugt mehr als 20%, aufweisen.

Weiterhin sind die Lumineszenzstoffe erfindungsgemäß so ausgebildet, dass sie im primären Emissionsbereich über unterschiedliche individuelle Abklingzeiten verfügen, wobei sich die individuellen Abklingzeiten der Lumineszenzstoffe, bezogen auf die kürzeste individuelle Abklingzeit der Lumineszenzstöffe, um mehr als 50%, bevorzugt mindestens 75%, besonders bevorzugt mindestens 100%, voneinander unterscheiden.

Wie eingangs bereits ausgeführt, müssen bei herkömmlichen Sicherheitsmarkierungen mit multi-exponentiellen Abklingkurven die spektralen Intensitäten eine Quasi-Identität oder zumindest große Überlappung aufweisen, so dass sie wie die Emission eines einzigen Lumineszenzstoffs wirken. Die Erfindung geht hier genau den gegensätzlichen Weg, indem Lumineszenzstoffe eingesetzt werden, deren spektrale Intensitäten einen Überlappungsgrad von weniger als 80%, jedoch mehr als 5% aufweisen. Durch die Kombination von mindestens zwei Lumineszenzstoffen mit teilweise überlappenden Emissionsspektren und signifikant unterschiedlichen Zeitverläufen (d.h. An- und/oder Abklingzeiten) wird eine Gesamtintensität in einem gewissen spektralen Bereich (primärer Emissionsbereich) erzeugt, deren effektive (d.h. gemessene) Gesamtabklingzeit kontinuierlich mit der Beobachtungswellenlänge variiert. Dies bedeutet, dass sich die Gesamtabklingzeit mit einer Veränderung der Wellenlänge fortwährend ändert.

Grundsätzlich können zur Nachahmung einer bestimmten Emissionsbandenform aus zwei Lumineszenzstoffen Kombinationen aus zwei oder mehr stark oder weniger stark überlappenden Lumineszenzstoffen herangezogen werden.

Werden für die Kombination jedoch Lumineszenzstoffe mit deutlich unterschiedlichem Abklingzeitverhalten ausgewählt, wie bei der vorliegenden Erfindung, so ändert sich das detektierte Messergebnis je nach Überlappungsgrad der beiden Komponenten in den jeweils untersuchten Wellenlängenbereichen.

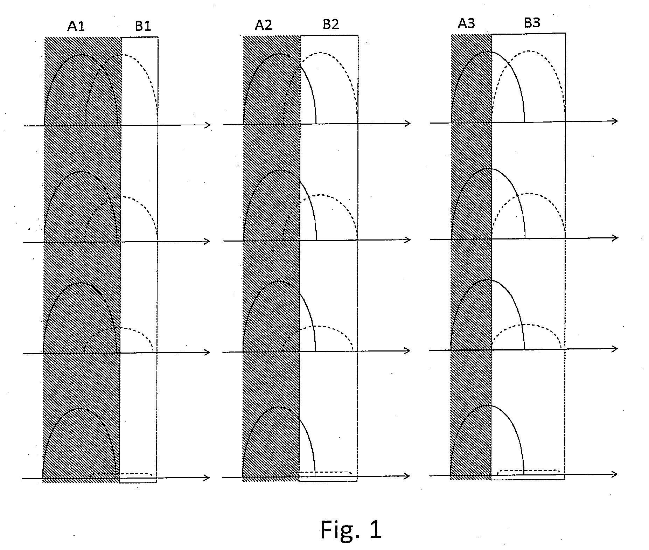

Dies soll anhand von Figur 1 näher erläutert werden. Figur 1 zeigt verschiedene Diagramme, in denen jeweils die emittierte (individuelle) Intensität von zwei Stoffen im primären Emissionsbereich gegen die Wellenlänge aufgetragen ist (spektrale Intensität). Veranschaulicht wird in schematischer Weise der zeitliche Verlauf der Emissionsbanden von zwei Lumineszenzstoffen mit signifikant verschiedenen Abklingzeiten, wobei ein erster Lumineszenzstoff eine längere Abklingzeit (durchgezogene Linie) und ein zweiter Lumineszenzstoff eine kürzere Abklingzeit (gestrichelte Linie) aufweisen. Zur Überprüfung eines Sicherheitsmerkmals mit Lumineszenzstoffen mit signifikant verschiedenen individuellen Abklingzeiten können unterschiedliche Spektralbereiche (Detektionskanäle) ausgewertet werden. Hierbei wird das gleiche primäre Emissionsspektrum für die drei Fälle in je zwei unterschiedliche Detektionskanäle A1/B1, A2/B2 bzw. A3/B3 aufgetrennt. wobei sich der zeitliche Verlauf der spektralen Intensität aus den über- bzw. untereinander angeordneten Diagrammen (von oben nach unten) ergibt. Ersichtlich bleibt im Beobachtungszeitraum die spektrale Abklingzeit der Emissionsbande mit längerer Intensität unverändert, wohingegen die spektrale Abklingzeit der Emissionsbande mit kürzerer Intensität mit der Zeit stark abnimmt.

Dabei bilden die Spektralbereiche A1 und B1, A2 und B2 bzw. A3 und B3 jeweils gemeinsam den primären Emissionsbereich (in den Diagrammen jeweils gekennzeichnet durch einen schraffierten A-Bereich und einen umrandeten B-Bereich). Demnach sind in den Detektionskanälen A1, A2, B2 und B3 aufgrund ihrer unterschiedlichen Größe jeweils unterschiedliche Anteile der Emissionsbanden des ersten und zweiten Lumineszenzstoffs enthalten. Jedoch enthalten die Detektionskanäle B1 und A3 nur Emissionsanteile des schneller bzw. langsamer abklingenden Lumineszenzstoffs. Somit ist die im Detektionskanal B1 gemessene Abklingzeit relativ kurz. Im Unterschied hierzu enthält der Detektionskanal B2 auch einen kleinen Emissionsanteil des ersten Lumineszenzstoffs mit längerer Abklingzeit, so dass die im Detektionskanal B2 gemessene Abklingzeit länger ist als jene im Detektionskanal B1. In entsprechender Weise zeigt der Detektionskanal B3 eine abermals längere Abklingzeit, aufgrund des noch größeren Emissionsanteils des ersten Lumineszenzstoffs mit längerer Abklingzeit. Für die Detektionskanäle A1, A2 und A3 gilt jeweils das Gegenteil, wobei der Detektionskanal A3 die längste Abklingzeit zeigt.

Wesentlich hierbei ist, dass mindestens ein Detektionskanal zumindest einen Teilbereich des primären Emissionsbereichs umfasst. Dieser Detektionskanal kann (alternativ) wie folgt ausgebildet sein:

- als Teilbereich des primären Emissionsbereichs,
- als primärer Emissionsbereich,
- als Wellenlängenbereich, der einen Teilbereich des primären Emissionsbereichs enthält und sich über den primären Emissionsbereich hinaus erstreckt,
- als Wellenlängenbereich, der den primären Emissionsbereich enthält und sich über den primären Emissionsbereich hinaus erstreckt.

Bevorzugt umfasst mindestens ein Detektionskanal zumindest einen Teilbereich des Überlappbereichs.

Im Sinne vorliegender Erfindung erstreckt sich der Begriff "Detektionskanal" sowohl auf ein Wellenlängenintervall, definiert durch voneinander verschiedene Wellenlängen, welche die Intervallgrenzen angeben, als auch nur auf eine einzelne Wellenlänge. Der Detektionskanal kann somit auch nur aus einer einzigen Wellenlänge bestehen. Entsprechendes gilt für den Begriff "Teilbereich".

Abweichend von diesem vereinfachten Schema kann erfindungsgemäß auch mit mehr als zwei spektralen Bereichen (Detektionskanälen), beispielsweise 10 Detektionskanälen, gearbeitet werden. Weiterhin sind diese Detektionskanäle normalerweise nicht wie hier schematisch dargestellt scharf getrennt, sondern werden durch den spektralen Verlauf der Filterkurve des im Detektors gewählten Filters geformt.

Weiterhin sind komplexere Formen der Überlappung bzw. des Spektralverlaufs möglich. Beispielsweise kann ein Lumineszenzstoff nicht nur, wie schematisch dargestellt, aus einer symmetrisch aufgebauten Emissionsbande bestehen, sondern im untersuchten Bereich eine asymmetrische Bande, eine Hauptbande mit einer Schulter oder mehrere Banden, wie z.B. eine Hauptbande und mehrere Nebenbanden, aufweisen. Weiterhin können die einzelnen Lumineszenzstoffe selbst Besonderheiten im zeitlichen Verhalten zeigen, z.B. ein messbares Anklingverhalten mit dazugehöriger Anklingzeit oder einen atypischen Verlauf der Abklingkurve. Hierdurch sind wesentlich komplexere Zusammenhänge zwischen dem beobachtetem Spektralbereich und der detektierten Abklingzeit mit lokalen Minima, lokalen Maxima bzw. einem oder mehreren Wendepunkten möglich.

Für eine Nachahmung des mit der Wellenlänge kontinuierlich variierenden Verlaufs der Gesamtabklingzeit derartiger Lumineszenzstoffe ist eine spezifische Kombination aus Lumineszenzstoffen notwendig, da die einzelnen Komponenten nicht nur in Summe das Zielspektrum ergeben müssen, sondern auch über passende Bereiche spektraler Überlappung und passender Abklingzeitverhältnisse verfügen müssen. Hierdurch wird eine Nachahmung erheblich erschwert.

Erfindungsgemäß kann durch eine Kombination von mindestens zwei Lurmineszenzstoffen mit einer definierten partiellen spektralen Überlappung und mit spezifischen unterschiedlichen Abklingzeiten ein effektiver Schutz gegen Nachahmung erreicht werden. Eine Nachahmung durch Kombination unterschiedlicher Lumineszenzstoffe mit anderen spektralen Eigenschaften ist hier nur noch möglich, wenn die genauen Messparameter, insbesondere die spektrale Lage und Form der Filterkurven der Detektionskanäle, die zeitliche Abtastung bzw. den zeitlichen Verlauf der Lumineszenz, sowie der Algorithmus bzw. die gewählten Messparameter zur Bestimmung des effektiven Abklingzeitwertes bekannt sind.

Durch eine Überlappung der spektralen Intensitäten der Lumineszenzstoffe von weniger als 80% und mehr als 5% wird erfindungsgemäß sichergestellt, dass genügend Varianz im Abklingzeitverhalten der Gesamtintensität der Lumineszenzstoffe auftritt und einerseits das Vorliegen einer einzelnen, über den gesamten Bereich konstanten Mischabklingzeit (entsprechend einem Überlappungsgrad von 100%, d.h. identische Spektralform beider Emissionen) sowie andererseits das Vorliegen einzelner, separater Emissionen mit jeweils konstanten Abklingzeiten (entsprechend einem Überlappungsgrad von 0%) in vorteilhafter Weise vermieden wird.

Bevorzugt liegen die Emissionen der Lumineszenzstoffe und somit der primäre Emissionsbereich in einem engen Spektralbereich. Bei einer vorteilhaften Ausgestaltung des erfindungsgemäßen Wertdokuments sind die Lumineszenzstoffe zu diesem Zweck so ausgebildet, dass unmittelbar bzw. direkt benachbarte Intensitätsmaxima voneinander verschiedener Emissionsspektren sich um weniger als 200 nm, vorzugsweise um weniger als 100 nm, voneinander unterscheiden. Vorzugsweise sind die unmittelbar bzw. direkt benachbarten Intensitätsmaxima voneinander verschiedener Emissionsspektren um mehr als 20 nm, besonders bevorzugt um mehr als 50 nm, voneinander entfernt, um einen für die Sicherheitsmarkierung hinreichend großen überlappenden Wellenlängenbereich zu erhalten. Bei einer besonders vorteilhaften Ausgestaltung der Erfindung haben die unmittelbar bzw. direkt benachbarten Intensitätsmaxima voneinander verschiedener Lumineszenzstoffe jeweils einen Abstand von weniger als 100 nm und mehr als 50 nm. Bei einer weiteren vorteilhaften Ausgestaltung des erfindungsgemäßen Wertdokuments sind die Lumineszenzstoffe so ausgebildet, dass die individuellen Abklingzeiten der Lumineszenzstoffe im Bereich von 50 $\mu$s bis 5000 $\mu$s, vorzugsweise im Bereich von 100 $\mu$s bis 1000 $\mu$s, liegen. Vorzugsweise liegt die individuelle Abklingzeit eines ersten Lumineszenzstoffs im Bereich von 100 $\mu$s bis 200 $\mu$s und die individuelle Abklingzeit eines zweiten Lumineszenzstoffs im Bereich von 400 $\mu$s bis 1000 $\mu$s, wodurch ein besonders guter Schutz gegen Nachahmung der Sicherheitsmarkierung erreicht werden kann.

Insbesondere sind Stoffe mit Abklingzeiten über 5 Millisekunden erfindungsgemäß bei maschineller Auswertung mit Hochgeschwindigkeits-Banknotensensoren nicht einsetzbar, da hier die Banknote mit Geschwindigkeiten von bis zu 12 Meter pro Sekunde transportiert wird. Eine Detektion bzw. Trennung solcher langen Abklingzeiten kann nicht durchgeführt werden, da sich die Banknote aus dem Messfeld bewegt bevor die Lumineszenzintensität aufgrund der Abklingzeit merklich gefallen ist. Weiterhin ist die Messung sehr kurzer Abklingzeiten technisch aufwändig. Bevorzugt weist keiner der Lumineszenzstoffe eine Abklingzeit von mehr als 5000 $\mu$s auf, besonders bevorzugt von weniger als 2000 $\mu$s, insbesondere bevorzugt von weniger als 1000 $\mu$s. In einer Ausprägung weist keiner der Lumineszenzstoffe eine Abklingzeit von weniger als 50 $\mu$s, besonders bevorzugt von weniger als 80 $\mu$s, insbesondere bevorzugt von weniger als 100 $\mu$s, auf.

Bevorzugt sind die Lumineszenzstoffe so ausgebildet, dass die überlappenden Emissionen (individuellen Intensitäten) der Lumineszenzstoffe über mindestens einen Detektionskanal bzw. über den primären Emissionsbereich, eine ähnliche integrierte individuelle Intensität bzw. sogar eine im Wesentlichen gleiche integrierte individuelle Intensität aufweisen. Weichen die integrierten individuellen Intensitäten der Lumineszenzstoffe zu stark voneinander ab, wird das Verhalten maßgeblich von nur einer Komponente festgelegt, wodurch unter Umständen keine ausreichend deutliche Änderung des Abklingzeitverhaltens über den zu überprüfenden Spektralbereich erfolgt.

Bei einer vorteilhaften Ausgestaltung des erfindungsgemäßen Wertdokuments liegen die Lumineszenzstoffe zu diesem Zweck demnach in einem solchen Mischungsverhältnis vor, dass sich deren integrierte individuelle Intensitäten über zumindest einen Teilbereich des primären Emissionsbereichs, insbesondere über den primären Emissionsbereich, bezogen auf die größte integrierte individuelle Intensität der Lumineszenzstoffe, um weniger als 50%, vorzugsweise um weniger als 30%, besonders bevorzugt um weniger als 15%, voneinander unterscheiden. Bevorzugt erfolgt eine Anregung der Lumineszenzstoffe im Infrarot-Bereich, d.h. in einem Wellenlängenbereich zwischen 700 nm und 2000 nm. Bei einer vorteilhaften Ausgestaltung der Erfindung sind die Lumineszenzstoffe im Infrarotbereich anregbar. Bei einer besonders bevorzugten Ausgestaltung der Erfindung sind die Lumineszenzstoffe so ausgebildet, dass sie durch eine selbe Wellenlänge gemeinsam anregbar sind, was insbesondere eine gezielte und relativ starke Anregung der Lumineszenzstoffe durch einen vergleichsweise schmalbandigen Anregungspuls (Lichtblitz) ermöglicht. Hierbei ist es vorteilhaft, wenn die Wellenlänge einem gemeinsamen Absorptionsmaximum in den Anregungsspektren der Lumineszenzstoffe entspricht oder bei voneinander verschiedenen Absorptionsmaxima mindestens 50% des jeweiligen Absorptionsmaximums anregen kann. Die Anregung erfolgt dabei bevorzugt in eine starke Anregungsbande eines Seltenerdions, welches in beiden Lumineszenzstoffen enthalten ist. Hierdurch ist eine effiziente gemeinsame Anregung der Lumineszenzstoffe möglich. Bevorzugt handelt es sich bei dieser Anregungsbande gleichzeitig um das Absorptionsmaximum der jeweiligen Anregungsspektren bzw. um eine Absorptionsbande, die mindestens 50% des Absorptionsmaximums des Anregungsspektrums erreicht. Bei einer besonders bevorzugten Ausgestaltung der Erfindung werden die Lumineszenzstoffe in einem solchen Verhältnis miteinander gemischt, dass eine gleichzeitige Anregung der einzelnen Lumineszenzstoffe möglich ist und die einzelnen Lumineszenzstoffe im Wesentlichen gleich stark lumineszieren und effizient anregbar sind. Bevorzugt sind also zwei Bedingungen erfüllt:

- Die integrierte individuelle Intensität jedes Stoffes beträgt bei gemeinsamer Anregung mindestens 50% der maximalen integrierten Intensität, die dieser Stoff unter optimaler Anregung erreicht.
- Die integrierten individuellen Intensitäten der verschiedenen Stoffe bei gemeinsamer Anregung unterscheiden sich um nicht mehr als 50% der größten integrierten individuellen Intensität.

Vorzugsweise findet die Emission der Lumineszenzstoffe im Wesentlichen im primären Emissionsbereich, besonders bevorzugt ausschließlich im primären Emissionsbereich statt. Insbesondere findet die Emission der Lumineszenzstoffe im Wesentlichen in einem Teilbereich des primären Emissionsbereichs, besonders bevorzugt ausschließlich in einem Teilbereich des primären Emissionsbereichs statt. Dies bedeutet, dass neben den teilweise überlappenden Emissionsbanden keine weiteren Emissionsbanden in anderen Spektralbereichen auftreten. Hierdurch wird in vorteilhafter Weise vermieden, dass weitere nichtüberlappende, isoliert auftretende Emissionsbanden im Rahmen einer Nachahmung separat ausgewertet werden können, um Rückschlüsse über die Emissionsbanden des primären Emissionsbereichs zu erlangen. In einer bevorzugten Ausgestaltung der Erfindung sind die Lumineszenzstoffe zu diesem Zweck so ausgebildet, dass mindestens 80%, insbesondere mindestens 90%, der Emissionen zumindest in einem Teilbereich des primären Emissionsbereichs emittiert werden.

Vorzugsweise liegt der primäre Emissionsbereich im Infrarot-Bereich, d.h. zwischen 700 nm und 2000 nm, besonders bevorzugt zwischen 800 nm und 2000 nm. Vorzugsweise handelt es sich bei den Emissionszentren der Leuchtstoffe um Seltenerdionen, insbesondere um die Seltenerdionen Neodym (Nd), Ytterbium (Yb), Erbium (Er), Thulium (Tm), und/oder Holmium (Ho).

In einer besonders bevorzugten Ausgestaltung der Erfindung liegt der primäre Emissionsbereich im Bereich von 750 nm bis 1100 nm. In einer weiteren bevorzugten Ausgestaltung der Erfindung liegt der primäre Emissionsbereich im Bereich von 800 nm bis 1100 nm. In einer weiteren bevorzugten Ausgestaltung der Erfindung liegt der primäre Emissionsbereich im Bereich von 900 nm bis 1100 nm. Insbesondere bevorzugt liegen dabei sowohl Anregung als auch Emission der Lumineszenzstoffe im Bereich von 750 bis 1100 nm und es handelt sich bei den Emissionszentren der Leuchtstoffe um die Seltenerdionen Neodym (Nd) und/oder Ytterbium (Yb). Neodym und Ytterbium zeigen in diesem Wellenlängenbereich verschiedene spektral dicht nebeneinander liegende Emissionen, welche daher in besonderem Maße zur Überlappung neigen. Bevorzugt enthalten die Leuchtstoffe außer Neodym und/oder Ytterbium keine weiteren optisch aktiven Seltenerdkationen, welche eine Lumineszenzemission verursachen.

Der Verlauf der spektral kontinuierlich variierenden Gesamtabklingzeit der Mischung von Lumineszenzstoffen kann verschiedenste Formen annehmen. In einer einfachen Variante verläuft die gemessene Gesamtabklingzeit monoton fallend oder steigend über den betrachteten spektralen Bereich hinweg. Es sind jedoch, abhängig von der spektralen Form und dem Überlappungsbereich der eingesetzten Lumineszenzstoffe auch deutlich komplexere Varianten möglich. Bevorzugt weist der Verlauf der gemessenen Gesamtabklingzeit ausgeprägte Strukturen auf, z.B. lokale Minima, Maxima oder Wendepunkte. Bevorzugt liegen diese Strukturen innerhalb eines über mindestens 50 nm, bevorzugt mindestens 100 nm, ausgedehnten Wellenlängenbereichs vor. Dies erlaubt eine einfache Prüfung der variierenden gemessenen (d.h. effektiven) Gesamtabklingzeit innerhalb des betrachteten Spektralbereichs und verbessert die Merkmalssicherheit, da die individuelle spektrale Analyse erschwert ist. In einer bevorzugten Ausgestaltung der Erfindung sind die Lumineszenzstoffe zu diesem Zweck so ausgebildet, dass ein spektraler Verlauf der Gesamtabklingzeit mindestens ein (globales oder lokales) Minimum und/oder mindestens ein (globales oder lokales) Maximum und/oder mindestens einen Wendepunkt aufweist, insbesondere innerhalb eines Wellenlängenbereichs von mindestens 50 nm, insbesondere von mindestens 100 nm. Vorzugsweise weist der spektrale Verlauf der Gesamtabklingzeit mindestens zwei (globale oder lokale) Minima und/oder mindestens zwei (globale oder lokale) Maxima auf.

Eine weitere Erhöhung der Komplexität ist möglich, wenn Lumineszenzstoffe mit besonderem Zeitverhalten verwendet werden, beispielsweise Lumineszenzstoffe, welche zusätzlich über eine nicht vernachlässigbare Anklingzeit verfügen. In diesem Fall steigt die Emissionsintensität während der Anregung des Lumineszenzstoffs erst langsam an und fällt dann nach Ende der Anregung wieder ab. In anderen Fällen steigt die Emissionsintensität sogar für einen gewissen Zeitraum nach Ende der Anregung zunächst weiter an, um schließlich wieder abzuklingen. In einer bevorzugten Ausgestaltung besitzt mindestens einer der eingesetzten Lumineszenzstoffe mit überlappenden Emissionen ein ausgeprägtes Anklingverhalten.

Bevorzugt zeigen die Leuchtstoffe im Wesentlichen (<5% rel. Intensität) keine zusätzliche Anti-Stokes-Emission.

Die Lumineszenzstoffe der Sicherheitsmarkierung des erfindungsgemäßen Wertdokuments können grundsätzlich frei gewählt werden, solange gewährleistet ist, dass deren Emissionen teilweise überlappen, wobei die Emissionsspektren einen Überlappungsgrad von weniger als 80% und mehr als 5% aufweisen, und wobei die Lumineszenzstoffe signifikant unterschiedliche Abklingzeiten aufweisen.

Erfindungsgemäß besonders bevorzugt sind Lumineszenzstoffe, die jeweils ein Wirtsgitter umfassen, das mit mindestens einem Dotierstoff, gewählt aus den Seltenerdmetallen (bzw. deren Ionen), dotiert sind.

Geeignete Wirtsgitter sind beispielsweise Oxide, Granate, Perovskite, Sulfide, Oxysulfide, Apatite, Vanadate, Wolframate, Gläser, Tantalate, Niobate, Halogenide, Fluoride oder Aluminate, insbesondere anorganische Wirtsgitter, wie YAG, ZnS, YAM, YAP, AIPO-5 Zeolith, $Zn_2SiO_4$, $YVO_4$, $CaSiO_3$, KMgF3, $Y_2O_2S$, $La_2O_2S$, $Ba_2P_2O_7$, $Gd_2O_2S$, $NaYW_2O_8$, $SrMoO_4$, $MgF_2$, MgO, $CaF_2$, $Y_3Ga_5O_{12}$, $KY(WO_4)_2$, $SrAl_{12}O_{19}$, ZBLAN, $LiYF_4$, $YPO_4$, $GdBO_3$, $BaSi_2O_5$. Erfindungsgemäß bevorzugt sind anorganische Wirtsgitter.

Erfindungsgemäß geeignete Dotierstoffe sind beispielsweise die Seltenen Erden: Ce, Pr, Nd, Sm, Eu, Gd, Tb, Dy, Ho, Er, Tm, Yb, Lu, bzw. Bi, Pb, Ni, Sn, Sb, W, Tl, Ag, Cu, Zn, Ti, Mn, Cr und V (bzw. deren Ionen), wobei Nd und Yb bevorzugt sind.

In einer besonders bevorzugten Ausgestaltung der Erfindung handelt es sich bei einem ersten Lumineszenzstoff um eine Ytterbium-dotierte anorganische Matrix und bei einem zweiten Lumineszenzstoff um eine Ytterbium-dotierte anorganische Matrix.

In einer weiteren bevorzugten Ausgestaltung der Erfindung handelt es sich bei einem ersten Lumineszenzstoff um eine sowohl mit Neodym als auch Ytterbium dotierte anorganische Matrix und bei einem zweiten Lumineszenzstoff um eine sowohl mit Neodym als auch Ytterbium dotierte anorganische Matrix.

In einer weiteren bevorzugten Ausgestaltung der Erfindung handelt es sich bei einem ersten Lumineszenzstoff um eine Neodym-dotierte anorganische Matrix und bei einem zweiten Lumineszenzstoff um eine Neodym-dotierte anorganische Matrix.

In einer weiteren bevorzugten Ausgestaltung der Erfindung handelt es sich bei einem ersten Lumineszenzstoff um eine sowohl mit Neodym als auch Ytterbium dotierte anorganische Matrix und bei einem zweiten Lumineszenzstoff um eine Neodym-dotierte anorganische Matrix.

In einer weiteren bevorzugten Ausgestaltung der Erfindung handelt es sich bei einem ersten Lumineszenzstoff um eine sowohl mit Neodym als auch Ytterbium dotierte anorganische Matrix und bei einem zweiten Lumineszenzstoff um eine Ytterbium-dotierte anorganische Matrix.

Demnach ist bevorzugt, dass die Lumineszenzstoffe jeweils ein mit mindestens einem Seltenerdmetall dotiertes Wirtsgitter umfassen, wobei insbesondere ein erster Lumineszenzstoff ein mit Ytterbium und/oder Neodym dotiertes anorganisches Wirtsgitter und ein zweiter Lumineszenzstoff ein mit Ytterbium und/oder Neodym dotiertes anorganisches Wirtsgitter umfasst.

Aufgrund ihrer im Vergleich zu anderen anorganischen Matrizen merklich verschobenen Emissionswellenlänge besteht mindestens ein Lumineszenzstoff bevorzugt aus einem mit Neodym und/oder Ytterbium dotierten Seltenerdphosphat. In einer besonders bevorzugten Ausgestaltung handelt es sich bei einem Lumineszenzstoff um ein mit Neodym und/oder Ytterbium dotiertes Seltenerdphosphat und bei einem weiteren Lumineszenzstoff um eine mit Neodym und/oder Ytterbium dotierte Seltenerd-Granatstruktur.

Seltenerd-Oxysulfide können ebenfalls eingesetzt werden, sind spektral jedoch weniger gut geeignet als Seltenerdphosphate. In einer weiteren bevorzugten Ausgestaltung der Erfindung besteht mindestens ein Lumineszenzstoff bevorzugt aus einem mit Neodym und/oder Ytterbium dotierten Seltenerd-Oxysulfid. In einer besonders bevorzugten Ausgestaltung handelt es sich bei einem Lumineszenzstoff um ein mit Neodym und/oder Ytterbium dotiertes Seltenerd-Oxysulfid und bei einem weiteren Lumineszenzstoff um eine mit Neodym und/oder Ytterbium dotierte Seltenerd-Granatstruktur.

In einer weiteren bevorzugten Ausgestaltung der Erfindung handelt es sich bei einem der Lumineszenzstoffe um ein Niobat, Tantalat, Vanadat oder Wolframat, welches mit Neodym und/oder Ytterbium dotiert ist. Bevorzugt handelt es sich bei einem weiteren Lumineszenzstoff um eine mit Neodym und/oder Ytterbium dotierte Seltenerd-Granatstruktur. Bei einer Kombination dieser Stoffklassen werden spektrale Verschiebungen beobachtet, welche für die erfindungsgemäße Kombination von Lumineszenzstoffen besonders geeignet sind.

In einer weiteren bevorzugten Ausgestaltung der Erfindung wird die unterschiedliche Abklingzeit durch Kombination eines Lumineszenzstoffs mit einem niedrigen Gesamtgehalt an optisch aktiven Seltenerdkationen von unter 3 Gewichtsprozent, bevorzugt unter 2 Gewichtsprozent, mit einem Lumineszenzstoff mit einem hohen Gesamtgehalt an optisch aktiven Seltenerdkationen von über 5 Gewichtsprozent, bevorzugt über 8 Gewichtsprozent, erzeugt. Mit "optisch aktiven Seitenerdkationen" sind hier die als Zentren zur Anregung und Emission der Lumineszenz in die anorganische Matrix dotierten Seltenerdkationen gemeint, wie z.B. Neodym und Ytterbium, im Gegensatz zu optisch inerten Seltenerdkationen, welche am Aufbau der Matrix beteiligt sind und nicht als Lumineszenzzentren wirken, wie z.B. Yttrium oder Lanthan. Bevorzugt handelt es sich bei den optisch aktiven Seltenerdkationen um Neodym und Ytterbium.

Demnach ist bevorzugt, dass die Lumineszenzstoffe so ausgebildet sind, dass ein Gesamtgehalt eines oder mehrerer optisch aktiver Seltenerdmetalle in einem ersten Lumineszenzstoff weniger als 3 Gew.-%, insbesondere weniger als 2 Gew.-%, und ein Gesamtgehalt eines oder mehrerer optisch aktiver Seltenerdmetalle in einem zweiten Lumineszenzstoff mehr als 5 Gew.-%, insbesondere mehr als 8 Gew.-%, beträgt.

Die Erfindung erstreckt sich weiterhin auf das in Anspruch 18 definierte Verfahren zum Identifizieren (d.h. Erkennen des Vorliegens oder Nicht-Vorliegens) der Sicherheitsmarkierung eines wie vorstehnd beschrieben ausgebildeten Wertdokuments. Das Verfahren umfasst die folgenden Schritte:

- Anregen der Lumineszenzstoffe mit mindestens einem (z.B. gemeinsamen) Anregungspuls,
- Detektieren des zeitlichen Verlaufs einer Gesamtintensität der emittierten Strahlungen der Lumineszenzstoffe in einem oder mehreren Detektionskanälen, wobei mindestens ein definierbarer bzw. definierter Detektionskanal zumindest einen Teilbereich des primären Emissionsbereichs umfasst,

- Bestimmen einer (effektiven) Abklingzeit in jedem Detektionskanal,
- Identifizieren der Sicherheitsmarkierung auf Basis der bestimmten einen oder mehreren Abklingzeiten.

Bei einer besonders vorteilhaften Ausgestaltung des erfindungsgemäßen Verfahrens wird der zeitliche Verlauf der Gesamtintensität der emittierten Strahlungen jeweils in mehreren, voneinander verschiedenen Detektionskanälen umfasst. Die Detektionskanäle können jeweils einen Teilbereich des primären Emissionsbereichs umfassen. Möglich ist jedoch auch, dass ein Teil des primären Emissionsbereichs und/oder weitere Emissionsbereiche vollständig außerhalb aller Detektionskanäle liegen.

Bei einer vorteilhaften Ausgestaltung des erfindungsgemäßen Verfahrens liegen mindestens zwei Detektionskanäle ganz oder teilweise innerhalb des primären Emissionsbereiches. Zum Beispiel kann der primäre Emissionsbereich in zwei gleich große Hälften aufgeteilt werden, wobei jede Hälfte einen Detektionskanal darstellt. Die Detektionskanäle müssen jedoch nicht exakt innerhalb des primären Emissionsbereiches liegen sondern können auch kleiner oder größer sein und somit z.B. über den primären Emissionsbereich hinausragen bzw. relativ zu diesem versetzt sein. Insbesondere können mehr als zwei Detektionskanäle, z.B. drei Detektionskanäle oder zehn Detektionskanäle innerhalb des primären Emissionsbereiches liegen.

Bei einer vorteilhaften Ausgestaltung des erfindungsgemäßen Verfahrens umfassen die einzelnen Detektionskanäle jeweils einen Wellenlängenbereich von weniger als 400 nm, bevorzugt weniger als 200 nm, besonders bevorzugt weniger als 100 nm. Gemäß einer bevorzugten Ausgestaltung sind alle Detektionskanäle im Wesentlichen gleich groß, das heißt sie unterscheiden sich in ihrer Größe um weniger als 10% voneinander. Gemäß einer weiteren bevorzugten Ausgestaltung besitzen die Detektionskanäle zumindest teilweise unterschiedliche Größen, z.B. besitzt ein Detektionskanal eine Größe von 100 nm und ein weiterer Detektionskanal weist eine Größe von 150 nm auf. Gemäß einer bevorzugten Ausführungsform liegen die einzelnen Detektionskanäle lückenlos aufeinanderfolgend vor, beispielsweise misst ein erster Detektionskanal den Wellenlängenbereich zwischen 900 nm und 1000 nm, ein zweiter Detektionskanal den Wellenlängenbereich zwischen 1000 nm und 1100 nm und ein dritter Detektionskanal den Wellenlängenbereich zwischen 1100 und 1200 nm. Gemäß einer weiteren bevorzugten Ausführungsform weisen ein oder mehrere Detektionskanäle Abstände zueinander auf, in welchen kein weiterer Detektionskanal liegt. Beispielsweise misst ein erster Detektionskanal den Wellenlängenbereich zwischen 900 nm und 1000 nm, ein zweiter Detektionskanal den Wellenlängenbereich zwischen 1000 nm und 1100 nm und ein dritter Detektionskanal den Wellenlängenbereich zwischen 1150 und 1250 nm.

In einer bevorzugten Ausgestaltung der Erfindung wird zur Überprüfung des Abklingzeitverhaltens die effektive Abklingzeit bei unterschiedlichen Wellenlängen bzw. Wellenlängenbereichen (d.h. zwei oder mehr Detektionskanälen) überprüft Das Abklingen der Emission kann dabei beispielsweise durch Verwendung von mindestens zwei Stützpunkten mit einem monoexponentiellem Fit der Form $I(t) = A \cdot e^{-t/\tau}$ angepasst werden (Abklingquotient). Es handelt sich hierbei um ein sehr schnelles und einfaches Messverfahren, welches durch die erfindungsgemäße Auswahl von Lumineszenzstoffen bzw. Lumineszenzstoffeigenschaften angewendet werden kann. Im Gegensatz zu Kombinationen von Lumineszenzstoffen des Stands der Technik, wie sie z.B. aus der Druckschrift US 9046486 B2 bekannt, sind in vorteilhafter Weise keine komplexen Detektionsverfahren notwendig, um eine erhöhte Sicherheit zu erhalten. Des Weiteren haben insbesondere organische Farbstoff-Moleküle im Vergleich zu erfindungsgemäßen Lumineszenzstoffen auf Basis von anorganischen Matrix-basierten Phosphoren breitere Emissionsspektren und deutlich kürzere Abklingzeiten, die oft im Nanosekundenbereich liegen. Weiterhin verfügen sie über wesentlich kleinere Stoke-Shifts. Diese Eigenschaften sind für ein Auslesen bzw. eine Abklingzeitüberprüfung nachteilig. Das erfindungsgemäße Verfahren ermöglicht somit eine relativ einfache, schnelle und zuverlässige Detektion der Sicherheitsmarkierung.

Die Erfindung wird nun anhand von Ausführungsbeispielen näher erläutert, wobei Bezug auf die beigefügten Figuren genommen wird. Es zeigen:

Fig. 1 Diagramme zur Veranschaulichung des zeitlichen Verlaufs der spektralen Intensitäten einer Kombination von Lumineszenzstoffen mit signifikant verschiedenen Abklingzeiten für verschiedene Detektionskanäle;

Fig. 2 Diagramme zur Veranschaulichung der Überlappung von zwei Emissionsspektren (2A), der resultierenden Gesamtintensität (2B) und der effektiven Anklingzeit (2C) und der Definition des primären Emissionsbereichs.

Fig. 3 ein Diagramm zur Darstellung der Gesamtabklingzeit einer Kombination aus zwei Yb-Lumineszenzstoffen;

Fig. 4 ein Diagramm zur Darstellung der Gesamtabklingzeit einer Kombination aus zwei Nd-Lumineszenzstöffen;

Fig. 5 ein Diagramm zur Darstellung der Gesamtabklingzeit einer Kombination aus einem Nd-Lumineszenzstoff und einem Nd/Yb-Lumineszenzstoff;

Fig. 6 ein Diagramm zur Darstellung der Gesamtabklingzeit einer Kombination aus einem Nd/Yb-Lumineszenzstoff und einem Nd/Yb-Lumineszenzstoff.

Ausführliche Beschreibung der Abbildungen

Figur 1, welche den zeitlichen Verlauf der spektralen Intensitäten innerhalb verschiedener Detektionskanäle bei einer Kombination von Lumineszenzstoffen mit signifikant verschiedenen Abklingzeiten veranschaulicht, wurde bereits beschrieben.

Figur 2A zeigt schematisch die Emissionsspektren von zwei verschiedenen Lumineszenzstoffen. Die Emissionsspektren ergänzen sich in einem Teilbereich ihrer (spektralen) Ausdehnung. Dieser Bereich ist schraffiert dargestellt.

Figur 2B zeigt die resultierende Gesamtintensität. Der primäre Emissionsbereich P ist der Bereich zwischen den punktierten Linien. Er erstreckt sich beidseits der maximalen Gesamtintensität bis zu der Wellenlänge, an der die Gesamtintensität das erste Mal unter 10% des Maximalwerts fällt ($\lambda_1$ bzw. $\lambda_2$).

Figur 2C zeigt schematisch die effektive Abklingzeit $\tau$ als Funktion der Wellenlänge im primären Emissionsbereich. Sie ergibt sich in diesem Beispiel, wenn der erste Lumineszenzstoff (durchgezogene Linie) eine kürzere Abklingzeit aufweist als der zweite Lumineszenzstoff (gestrichelte Linie).

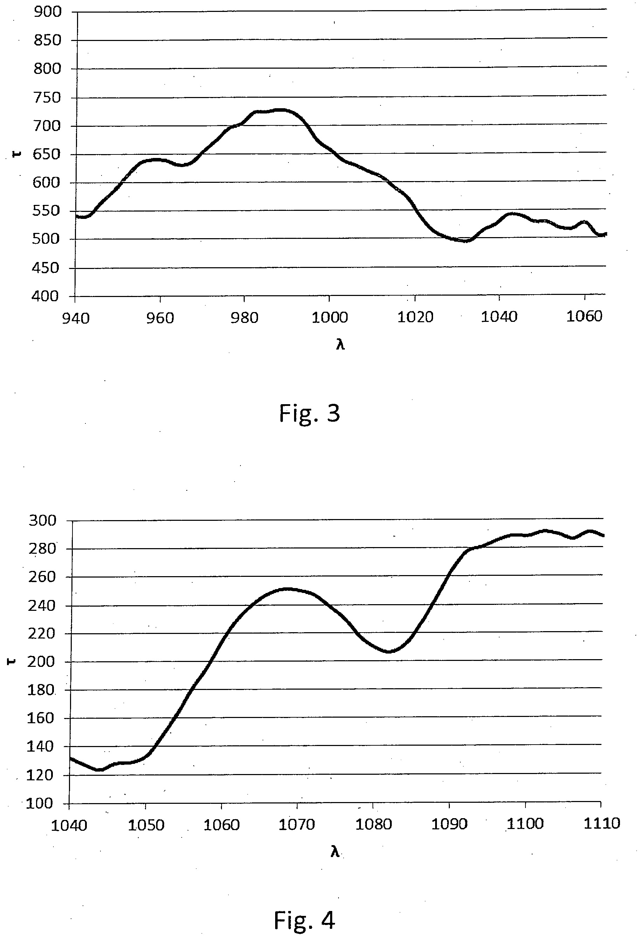

Sei zunächst Figur 3 betrachtet, worin beispielhaft eine Messung der spektralen Gesamtabklingzeit einer Kombination aus zwei Yb-Lumineszenzstoffen gezeigt ist. In Figur 3 ist die Gesamtabklingzeit (in Mikrosekunden, $\mu$s) gegen die Emissions-Wellenlänge (in Nanometer, nm) im Bereich von 940 nm bis 1065 nm aufgetragen. Die gemessenen Datenpunkte sind durch eine durchgezogene Datenlinie miteinander verbunden. Als erster Lumineszenzstoff wird ein Ytterbium-dotiertes Lanthanphosphat mit einem Ytterbium-Gehalt von 1,5 Gewichtsprozent und einer Abklingzeit von 900 $\mu$s verwendet. Als zweiter Lumineszenzstoff wird ein mit Ytterbium dotierter Yttrium-Aluminium-Granat mit einem Ytterbium-Gehalt von 39 Gewichtsprozent und einer Abklingzeit von 400 $\mu$s verwendet.

Bei Anregung der Absorptionsbanden des Ytterbiums lumineszieren beide Lumineszenzstoffe im Bereich zwischen 940 bis 1065 nm, wobei die jeweiligen Emissionen teilweise überlappen (Überlappungsgrad 37 %). Der in Fig. 2 angegebene Wellenlängenbereich umfasst den primären Emissionsbereich der eingesetzten Lumineszenzstoffe. Die Lumineszenzstoffe wurden in einem solchen Mengenverhältnis miteinander gemischt, dass sie bei gleichzeitiger Anregung mit gleicher Intensität lumineszieren.

Wird die Gesamtabklingzeit der Emissionen bei spezifischen Wellenlängen der Emissionen bestimmt, so werden die Werte aus Figur 3 erhalten. Für eine Messung der Gesamtabklingzeit der Emissionen werden die beiden Lumineszenzstoffe durch einen selben Anregungspuls (Lichtblitz) gemeinsam in der Absorptionsbande des Ytterbiums angeregt. Der Anregungspuls wird zu einem bestimmten Zeitpunkt eingeschaltet und anschließend ausgeschaltet. Die Zeitverläufe der Intensitäten beider Lumineszenzstoffe weisen jeweils eine Anklingphase, in der die Intensität von Null bis zu einem Maximalwert ansteigt, sowie eine Abklingphase, in der die Intensität vom Maximalwert an abfällt, auf. Die Messungen der Gesamtintensität finden zu definierten Zeitpunkten statt, wobei die Messungen zu äquidistanten Zeitpunkten, jedoch auch nicht-äquidistant Zeitpunkten, erfolgen können. Aus dem zeitlichen Verlauf der Gesamtintensität kann die Gesamtabklingzeit der Emissionen bei spezifischen Wellenlängen bestimmt werden.

Dazu werden im Rahmen der Beispiele die Intensitätswerte $I_{100}$ nach 100$\mu$s und $I_{400}$ nach 400$\mu$s gemessen und die effektive Abklingzeit $\tau$ wie folgt ermittelt:

$$\tau = -300\mu s / \ln(I_{400}/I_{100})$$

Werden z.B. die Intensitätswerte bei zwei anderen Zeiten als Basis genommen oder eine anderer Algorithmus angewandt, so ergeben sich jeweils unterschiedliche Gesamtabklingzeitkurven. Es ist daher zur Nachstellung der Messdaten bzw. Prüfkriterien solcher erfindungsgemäßer Merkmale erforderlich, die Messparameter genau zu kennen, wodurch die Schutzwirkung deutlich erhöht wird.

Die spektrale Gesamtabklingzeit weist ein lokales Maximum, ein lokales Minimum sowie einen Wendepunkt auf.

Wird die Gesamtabklingzeit der Emissionen in einem ersten Wellenlängenbereich von 960 nm bis 1000 nm (entsprechend einem ersten Detektionskanal) sowie in einem zweiten Wellenlängenbereich von 1000 nm bis 1040 nm (entsprechend einem zweiten Detektionskanal) gemessen, so wird für den ersten Detektionskanal ein Mittelwert der Gesamtabklingzeit von ca. 700 $\mu$s und für den zweiten Detektionskanal ein Mittelwert der Gesamtabklingzeit von ca. 550 $\mu$s erhalten. Aus den beiden Gesamtabklingzeiten kann die Kombination von Lumineszenzstoffen zuverlässig und sicher identifiziert werden.

In den Figuren 4 bis 7 sind beispielhafte Messungen der spektralen Gesamtabklingzeit von Kombinationen aus zwei verschiedenen Lumineszenzstoffen gezeigt. Um unnötige Wiederholungen zu vermeiden, werden jeweils lediglich die Unterschiede zu Figur 3 erläutert und ansonsten wird auf die dortigen Ausführungen Bezug genommen.

In Figur 4 ist die spektrale Gesamtabklingzeit einer Kombination aus zwei Nd-Lumineszenzstoffen gezeigt. Als erster Lumineszenzstoff wird ein Neodym-dotiertes Lanthanphosphat mit einem Neodymgehalt von 4,7 Gewichtsprozent und einer Abklingzeit von 100 $\mu$s verwendet. Als zweiter Lumineszenzstoff wird ein mit Neodym dotiertes Lutetiumtantalat mit einem Neodymgehalt von 1 Gewichtsprozent und einer Abklingzeit von 300 $\mu$s verwendet. Bei Anregung der Absorptionsbanden des Neodyms lumineszieren beide Lumineszenzstoffe im Bereich von 1040 nm bis 1110 nm, wobei die jeweiligen Emissionen teilweise überlappen (Überlappungsgrad 43 %). Der im Diagramm von Figur 4 angegebene Wellenlängenbereich enthält den primären Emissionsbereich der eingesetzten Lumineszenzstoffe. Die spektrale Gesamtabklingzeit weist ein lokales Maximum, ein lokales Minimum sowie einen Wendepunkt auf.

Wird die Gesamtabklingzeit der Emissionen in einem ersten Wellenlängenbereich von 1040 nm bis 1075 nm (entsprechend einem ersten Detektionskanal) sowie in einem zweiten Wellenlängenbereich von 1075 nm bis 1110 nm (entsprechend einem zweiten Detektionskanal) gemessen, so wird für den ersten Detektionskanal ein Mittelwert der Gesamtabklingzeit von ca. 190 $\mu$s und für den zweiten Detektionskanal ein Mittelwert der Gesamtabklingzeit von ca. 260 $\mu$s erhalten. Wird die Gesamtabklingzeit alternativ in mehreren kleineren Bereichen gemessen (1040 nm -1050 nm; 1050 nm -1060 nm; 1060 nm -1070 nm; 1070 nm -1080 nm; 1080 nm -1090 nm; 1090 nm -1100 nm; 1100 nm -1110 nm), so ergeben sich jeweils Gesamtabklingzeiten von im Mittel ca. 129 $\mu$s, 181$\mu$s, 244$\mu$s, 229$\mu$s, 231$\mu$s, 284$\mu$s und 289$\mu$s.

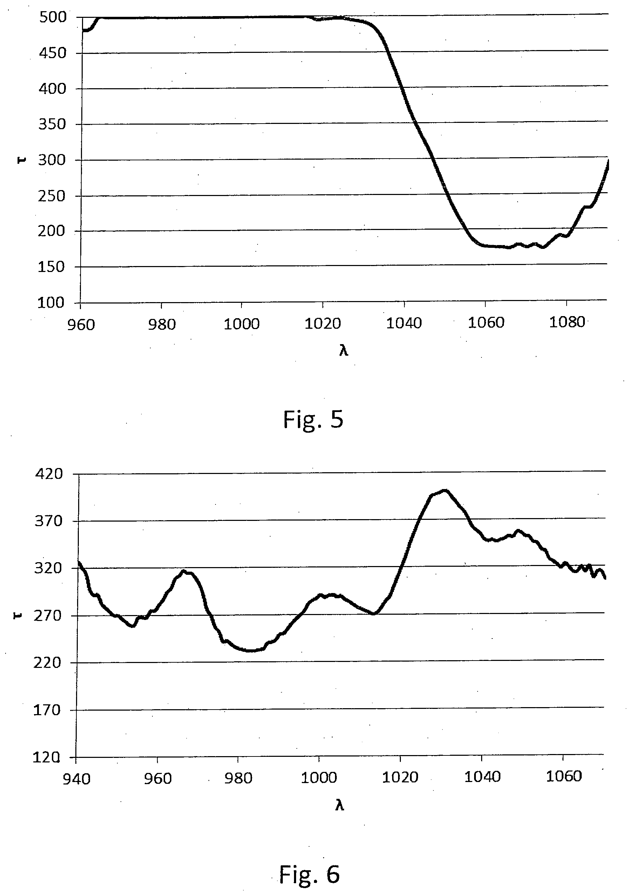

In Fig. 5 ist die spektrale Gesamtabklingzeit einer Kombination aus einem Nd-Lumineszenzstoff und einem Nd/Yb-Lumineszenzstoff gezeigt. Als erster Lumineszenzstoff wird ein Neodym-dotiertes Lanthanphosphat mit einem Neodymgehalt von 4,7 Gewichtsprozent und einer Abklingzeit von 100 $\mu$s verwendet. Als zweiter Lumineszenzstoff wird ein zu gleichen Teilen mit Neodym und Ytterbium dotierter Yttrium-Aluminium-Granat mit einem Dotierstoffgehalt von 19,5 Gewichtsprozent und einer Abklingzeit von 500 $\mu$s verwendet. Der erste und zweite Lumineszenzstoff werden in einem relativen Intensitätsverhältnis von 5 zu 6 eingesetzt. Bei Anregung der Absorptionsbanden des Neodyms lumineszieren beide Lumineszenzstoffe im Bereich von 960 nm bis 1090 nm, wobei die jeweiligen Emissionen teilweise überlappen (Überlappungsgrad 12 %). Der im Diagramm von Figur 5 angegebene Wellenlängenbereich enthält den primären Emissionsbereich der eingesetzten Lumineszenzstoffe. Die spektrale Gesamtabklingzeit ist in weiten Bereichen konstant, dann monoton fallend und steigt danach wieder an.

Wird die Gesamtabklingzeit der Emissionen in einem ersten Wellenlängenbereich von 970 nm bis 1010 nm (entsprechend einem ersten Detektionskanal), in einem zweiten Wellenlängenbereich von 1010 nm bis 1050 nm (entsprechend einem zweiten Detektionskanal), sowie einem dritten Wellenlängenbereich von 1050 nm bis 1090 nm (entsprechend einem dritten Detektionskanal) gemessen, so wird für den ersten Detektionskanal ein Mittelwert der Gesamtabklingzeit von ca. 500 $\mu$s, für den zweiten Detektionskanal ein Mittelwert der Gesamtabklingzeit von ca. 400 $\mu$s und für den dritten Detektionskanal ein Mittelwert von ca. 200 $\mu$s erhalten.

In Fig. 6 ist die spektrale Gesamtabklingzeit einer Kombination aus einem Nd/Yb-Lumineszenzstoff und einem Nd/Yb-Lumineszenzstoff gezeigt. Als erster Lumineszenzstoff wird ein mit Neodym und Ytterbium im Verhältnis 1:4 dotiertes Yttriumoxysulfid mit einem Dotierstoffgehalt von 30 Gewichtsprozent und einer Abklingzeit von 120 $\mu$s verwendet. Als zweiter Lumineszenzstoff wird ein zu gleichen Teilen mit Neodym und Ytterbium dotierter Yttrium-Aluminium-Granat mit einem Dotierstoffgehalt von 19,5 Gewichtsprozent und einer Abklingzeit von 500 $\mu$s verwendet. Bei Anregung der Absorptionsbanden des Neodyms lumineszieren beide Lumineszenzstoffe im Bereich von 940 nm bis 1070 nm, wobei die jeweiligen Emissionen teilweise überlappen (Überlappungsgrad 33 %). Der im Diagramm von Figur 6 angegebene Wellenlängenbereich enthält den primären Emissionsbereich der eingesetzten Lumineszenzstoffe. Die spektrale Gesamtabklingzeit weist mehrere lokale Maxima und mehrere lokale Minima auf.

Wird die Gesamtabklingzeit der Emissionen in einem ersten Wellenlängenbereich von 940 nm bis 1005 nm (entsprechend einem ersten Detektionskanal) sowie in einem zweiten Wellenlängenbereich von 1005 nm bis 1070 nm (entsprechend einem zweiten Detektionskanal) gemessen, so wird für den ersten Detektionskanal ein Mittelwert der Gesamtabklingzeit von ca. 270 $\mu$s und für den zweiten Detektionskanal ein Mittelwert der Gesamtabklingzeit von ca. 330 $\mu$s erhalten.

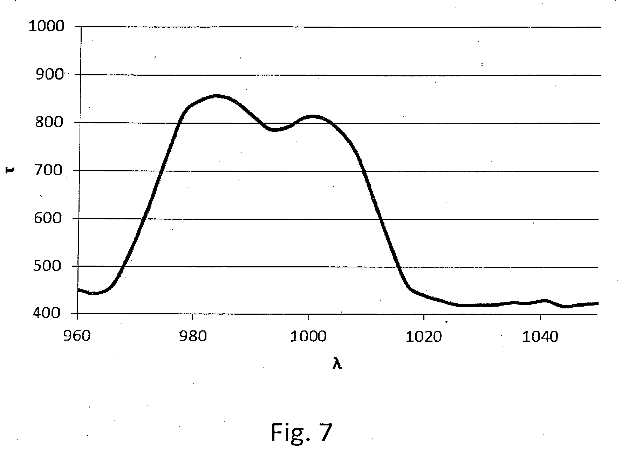

In Fig. 7 ist die spektrale Gesamtabklingzeit einer Kombination aus einem Er-Lumineszenzstoff und einem Yb-Lumineszenzstoff gezeigt. Als erster Lumineszenzstoff wird ein mit Erbium dotiertes Lanthanoxysulfid mit einem Dotierstoffgehalt von 2 Gewichtsprozent und einer Abklingzeit von 1000 μs verwendet. Als zweiter Lumineszenzstoff wird ein mit Ytterbium dotierter Yttrium-Aluminium-Granat mit einem Dotierstoffgehalt von 39 Gewichtsprozent und einer Abklingzeit von 400 μs verwendet. Bei gleichzeitiger Anregung der überlappenden Absorptionsbande des Ytterbiums und Erbiums lumineszieren beide Lumineszenzstoffe im Bereich von 960 nm bis 1050 nm, wobei die jeweiligen Emissionen teilweise überlappen (Überlappungsgrad 34 %). Der im Diagramm von Figur 7 angegebene Wellenlängenbereich enthält den primären Emissionsbereich der eingesetzten Lumineszenzstoffe. Die spektrale Gesamtabklingzeit weist mehrere lokale Maxima und mehrere lokale Minima auf.

Wird die Gesamtabklingzeit der Emissionen in einem ersten Wellenlängenbereich von 960 nm bis 1005 nm (entsprechend einem ersten Detektionskanal) sowie in einem zweiten Wellenlängenbereich von 1005 nm bis 1050 nm (entsprechend einem zweiten Detektionskanal) gemessen, so wird für den ersten Detektionskanal ein Mittelwert der Gesamtabklingzeit von ca. 710 μs und für den zweiten Detektionskanal ein Mittelwert der Gesamtabklingzeit von ca. 470 μs erhalten.

Die Kombinationen der Lumineszenzstoffe der Figuren 3 bis 7 können jeweils als Sicherheitsmarkierung für ein erfindungsgemäßes Wertdokument eingesetzt werden.

Wie sich aus vorstehender Beschreibung ergibt, bietet die Erfindung große Vorteile gegenüber den im Stand der Technik bekannten Sicherheitsmarkierungen und Auswerteverfahren, bei denen die in Kombination eingesetzten Lumineszenzstoffe eine identische Emissionswellenlänge oder zumindest nur gering unterschiedliche Emissionswellenlängen besitzen. Insbesondere kann mit den erfindungsgemäß in Kombination eingesetzten Lumineszenzstoffen ein sehr hoher Schutz gegen Nachahmung erreicht werden. Zudem ermöglichen diese eine relativ einfache, schnelle und zuverlässige Identifikation des Sicherheitsmerkmals. So kann das erfindungsgemäß eingesetzte Sicherheitsmerkmal insbesondere auch in zeitkritischen Anwendungsfällen eingesetzt werden, in denen ein schnelles Auswerteverfahren essentiell ist, beispielsweise für die Analyse auf schnelllaufenden Banknotenbearbeitungsmaschinen.

**Patentansprüche**

1. Wertdokument mit einer Sicherheitsmarkierung in Form von mindestens zwei anorganischen Lumineszenzstoffen, deren Emissionsspektren sich wobei in einem primären Emissionsbereich teilweise überlappen, wobei die Emissionsspektren einen Überlappungsgrad von weniger als 80% und mehr als 5% aufweisen, wobei die Lumineszenzstoffe im primären Emissionsbereich verschiedene individuelle Abklingzeiten (τ) aufweisen, wobei sich die individuellen Abklingzeiten (τ) der Lumineszenzstoffe, bezogen auf die kürzeste individuelle Abklingzeit, um mehr als 50% voneinander unterscheiden.

2. Wertdokument nach Anspruch 1, bei welchem die Emissionsspektren der Lumineszenzstoffe einen Überlappungsgrad von weniger als 65%, insbesondere von weniger als 50%, und/oder von mehr als 10%, insbesondere von mehr als 20%, aufweisen.

3. Wertdokument nach Anspruch 1 oder 2, bei welchem direkt benachbarte Intensitätsmaxima von zwei verschiedenen Lumineszenzstoffen sich um weniger als 200 nm, insbesondere um weniger als 100 nm, voneinander unterscheiden, und um mehr als 20 nm, insbesondere mehr als 50 nm, voneinander entfernt sind.

4. Wertdokument nach einem der Ansprüche 1 bis 3, bei welchem sich die individuellen Abklingzeiten (τ) der Lumineszenzstoffe, bezogen auf die kürzeste individuelle Abklingzeit, um mehr als 75%, insbesondere um mindestens 100%, voneinander unterscheiden.

5. Wertdokument nach einem der Ansprüche 1 bis 4, bei welchem die individuellen Abklingzeiten (τ) der Lumineszenzstoffe im Bereich von 50 μs bis 5000 μs, insbesondere im Bereich von 100 μs bis 1000 μs, liegen, wobei insbesondere die individuelle Abklingzeit (τ) eines ersten Lumineszenzstoffs im Bereich von 100 μs bis 200 μs und die individuelle Abklingzeit (τ) eines zweiten Lumineszenzstoffs im Bereich 400 μs bis 1000 μs liegt.

6. Wertdokument nach einem der Ansprüche 1 bis 5, bei welchem ein spektraler Verlauf einer Gesamtabklingzeit im primären Emissionsbereich der Kombination der Lumineszenzstoffe mindestens ein Minimum und/oder mindestens ein Maximum und/oder mindestens einen Wendepunkt, insbesondere innerhalb eines Wellenlängenbereichs von mindestens 50 nm, insbesondere von mindestens 100 nm, aufweist.

7. Wertdokument nach einem der Ansprüche 1 bis 6, bei welchem die Lumineszenzstoffe in einem solchen Mischungsverhältnis vorliegen, dass sich die über den primären Emissionsbereich integrierten individuellen Intensitäten, bezogen auf die größte integrierte individuelle Intensität der Lumineszenzstoffe, um weniger als 50%, insbesondere um weniger als 30%, insbesondere um weniger als 15%, voneinander unterscheiden.

8. Wertdokument nach einem der Ansprüche 1 bis 7, bei welchem die Lumineszenzstoffe so ausgebildet sind, dass mindestens 90%, insbesondere mindestens 99%, der Gesamtemission der Lumineszenzstoffe zumindest in einem Teilbereich des primären Emissionsbereichs emittiert wird.

9. Wertdokument nach einem der Ansprüche 1 bis 8, bei welchem die Lumineszenzstoffe im primären Emissionsbereich anregbar sind.

10. Wertdokument nach einem der Ansprüche 1 bis 9 bei welchem die Lumineszenzstoffe bei derselben Wellenlänge anregbar sind, wobei die integrierte individuelle Intensität jedes Lumineszenzstoffs mindestens 50% der maximalen integrierten individuellen Intensität dieses Stoffes bei optimaler Anregung beträgt.

11. Wertdokument nach einem der Ansprüche 1 bis 10, bei welchem die Lumineszenzstoffe jeweils ein mit mindestens einem Seltenerdmetall dotiertes Wirtsgitter umfassen.

12. Wertdokument nach Anspruch 11, wobei ein erster Lumineszenzstoff ein mit Ytterbium und/oder Neodym dotiertes anorganisches Wirtsgitter und ein zweiter Lumineszenzstoff ein mit Ytterbium und/oder Neodym dotiertes anorganisches Wirtsgitter umfasst.

13. Wertdokument nach Anspruch 11 oder 12, bei welchem ein Gesamtgehalt eines oder mehrerer Seltenerdmetalle in einem ersten Lumineszenzstoff weniger als 3 Gew.-%, insbesondere weniger als 2 Gew.-%, und ein Gesamtgehalt eines oder mehrerer Seltenerdmetalle in einem zweiten Lumineszenzstoff mehr als 5 Gew.-%, insbesondere mehr als 8 Gew.-%, beträgt.

14. Wertdokument nach einem der Ansprüche 11 bis 13, bei welchem mindestens ein Lumineszenzstoff ein Seltenerd-dotiertes Seltenerdphosphat umfasst.

15. Wertdokument nach einem der Ansprüche 11 bis 14, bei welchem mindestens ein Lumineszenzstoff ein mit Ytterbium und/oder Neodym dotiertes Seltenerdphospat umfasst, wobei insbesondere ein erster Lumineszenzstoff ein mit Ytterbium und/oder Neodym dotiertes Seltenerdphosphat und ein zweiter Lumineszenzstoff eine mit Ytterbium und/oder Neodym dotierte Seltenerd-Granatstruktur umfasst.

16. Wertdokument nach einem der Ansprüche 11 bis 14, bei welchem ein Lumineszenzstoff ein Seltenerd-dotiertes Niobat, Tantalat, Vanadat oder Wolframat umfasst.

17. Wertdokument nach einem der Ansprüche 11 bis 14 oder 16, bei welchem ein Lumineszenzstoff ein mit Ytterbium und/oder Neodym dotiertes Niobat, Tantalat, Vanadat oder Wolframat umfasst, wobei insbesondere ein erster Lumineszenzstoff ein mit Ytterbium und/oder Neodym dotiertes Niobat, Tantalat, Vanadat oder Wolframat und ein zweiter Lumineszenzstoff eine mit Ytterbium und/oder Neodym dotierte Seltenerd-Granatstruktur umfasst.

18. Verfahren zum Identifizieren der Sicherheitsmarkierung eines Wertdokuments nach einem der Ansprüche 1 bis 17, welches die folgenden Schritte umfasst:

Anregen der Lumineszenzstoffe durch mindestens einen Anregungspuls, Detektieren einer Gesamtintensität der emittierten Strahlungen der Lumineszenzstoffe mindestens in einem Detektionskanal, der zumindest einen Teilbereich des primären Emissionsbereichs, insbesondere des Überlappbereichs umfasst,
Bestimmen einer Abklingzeit ($\tau$) in dem mindestens einen Detektionskanal, und
Identifizieren der Sicherheitsmarkierung auf Basis der bestimmten Abklingzeit ($\tau$).

19. Verfahren nach Anspruch 18, bei dem die Summe der Detektionskanäle gegeben ist durch einen Bereich von höchstens $\pm$ 200 nm, insbesondere höchstens $\pm$ 100 nm, um eine Wellenlänge, an der die spektrale Gesamtintensität der Emissionen der Lumineszenzstoffen im primären Emissionsbereich einen Schwerpunkt aufweist.

20. Verfahren nach Anspruch 18 oder 19, bei dem für mindestens einen Detektionskanal zu mindestens zwei, bevorzugt zu zwei bis sieben, besonders bevorzugt zu genau zwei Zeitpunkten eine Lumineszenzintensität bestimmt wird, und eine Abklingzeit aus diesen mindestens zwei Intensitäten bestimmt wird.

21. Sicherheitsmerkmal zur Herstellung eines Wertdokuments nach einem der Ansprüche 1-17 umfassend mindestens zwei anorganische Lumineszenzstoffe , deren Emissionsspektren sich in einem primären Emissionsbereich teilweise überlappen, wobei die Emissionsspektren einen Überlappungsgrad von weniger als 80% und mehr als 5% aufweisen, wobei die Lumineszenzstoffe im primären Emissionsbereich verschiedene individuelle Abklingzeiten ($\tau$) aufweisen, wobei sich die individuellen Abklingzeiten ($\tau$) der Lumineszenzstoffe, bezogen auf die kürzeste individuelle Abklingzeit, um mehr als 50% voneinander unterscheiden.

**Claims**

1. A value document having a security marking in the form of at least two inorganic luminescent substances whose emission spectra partially overlap in a primary emission range, wherein the emission spectra have a degree of overlap of less than 80% and more than 5%, wherein the luminescent substances have different individual decay times ($\tau$) in the primary emission range, wherein the individual decay times ($\tau$) of the luminescent substances differ from each other by more than 50% with reference to the shortest individual decay time.

2. The value document according to claim 1, wherein the emission spectra of the luminescent substances have a degree of overlap of less than 65%, in particular of less than 50%, and/or of more than 10%, in particular of more than 20%.

3. The value document according to claim 1 or 2, wherein directly adjacent intensity maxima of two different luminescent substances differ from each other by less than 200 nm, in particular by less than 100 nm, and are mutually spaced apart by more than 20 nm, in particular more than 50 nm.

4. The value document according to any of claims 1 to 3, wherein the individual decay times ($\tau$) of the luminescent substances differ from each other by more than 75%, in particular by at least 100%, with reference to the shortest individual decay time.

5. The value document according to any of claims 1 to 4, wherein the individual decay times ($\tau$) of the luminescent substances are in the range of 50 $\mu$s to 5000 $\mu$s, in particular in the range of 100 $\mu$s to 1000 $\mu$s, wherein in particular the individual decay time ($\tau$) of a first luminescent substance is in the range of 100 $\mu$s to 200 $\mu$s and the individual decay time ($\tau$) of a second luminescent substance is in the range of 400 $\mu$s to 1000 $\mu$s.

6. The value document according to any of claims 1 to 5, wherein a spectral profile of an overall decay time in the primary emission range of the combination of the luminescent substances has at least one minimum and/or at least one maximum and/or at least one inflection point, in particular within a wavelength range of at least 50 nm, in particular of at least 100 nm.

7. The value document according to any of claims 1 to 6, wherein the luminescent substances are present in such a mixing ratio that the individual intensities integrated over the primary emission range differ from each other by less than 50%, in particular by less than 30%, in particular by less than 15% with reference to the greatest integrated individual intensity of the luminescent substances.

8. The value document according to any of claims 1 to 7, wherein the luminescent substances are formed such that at least 90%, in particular at least 99%, of the overall emission of the luminescent substances is emitted at least in a sub-range of the primary emission range.

9. The value document according to any of claims 1 to 8, wherein the luminescent substances can be excited in the primary emission range.

10. The value document according to any of claims 1 to 9, wherein the luminescent substances can be excited at the same wavelength, wherein the integrated individual intensity of each luminescent substance amounts to at least 50% of the maximum integrated individual intensity of this substance at optimum excitation.

11. The value document according to any of claims 1 to 10, wherein the luminescent substances each comprise a host lattice doped with at least one rare earth metal.

12. The value document according to claim 11, wherein a first luminescent substance comprises an ytterbium-doped and/or neodymium-doped inorganic host lattice and a second luminescent substance comprises an ytterbium-doped and/or neodymium-doped inorganic host lattice.

13. The value document according to claim 11 or 12, wherein an overall content of one or several rare earth metals in a first luminescent substance amounts to less than 3 wt.-%, in particular less than 2 wt.-%, and an overall content of one or several rare earth metals in a second luminescent substance amounts to more than 5 wt.-%, in particular more than 8 wt.-%.

14. The value document according to any of claims 11 to 13, wherein at least one luminescent substance comprises a rare-earth-doped rare earth phosphate.

15. The value document according to any of claims 11 to 14, wherein at least one luminescent substance comprises an ytterbium-doped and/or neodymium-doped rare earth phosphate, wherein in particular a first luminescent substance contains an ytterbium-doped and/or neodymium-doped rare earth phosphate and a second luminescent substance contains an ytterbium-doped and/or neodymium-doped rare-earth garnet structure.

16. The value document according to any of claims 11 to 14, wherein a luminescent substance comprises a rare-earth-doped niobate, tantalate, vanadate or tungstate.

17. The value document according to any of claims 11 to 14 or 16, wherein a luminescent substance comprises an ytterbium-doped and/or neodymium-doped niobate, tantalate, vanadate or tungstate, wherein in particular a first luminescent substance comprises an ytterbium-doped and/or neodymium-doped niobate, tantalate, vanadate or tungstate and a second luminescent substance comprises an ytterbium-doped and/or neodymium-doped rare-earth garnet structure.

18. A method for identifying the security marking of a value document according to any of claims 1 to 17, comprising the following steps of:

exciting the luminescent substances through at least one excitation pulse,
detecting an overall intensity of the emitted radiations of the luminescent substances at least in one detection channel comprising at least a sub-range of the primary emission range, in particular of the overlap range,
determining a decay time ($\tau$) in the at least one detection channel, and
identifying the security marking on the basis of the determined decay time ($\tau$).

19. The method according to claim 18, wherein the sum of the detection channels is given by a range of at most $\pm$ 200 nm, in particular at most $\pm$ 100 nm, around a wavelength at which the overall spectral intensity of the emissions of the luminescent substances has a focal point in the primary emission range.

20. The method according to claim 18 or 19, wherein for at least one detection channel a luminescence intensity is determined at at least two, preferably to two to seven, more preferably at exactly two points in time, and a decay time is determined from these at least two intensities.

21. A security feature for manufacturing a value document according to any of claims 1-17, comprising at least two inorganic luminescent substances whose emission spectra partially overlap in a primary emission range, wherein the emission spectra have a degree of overlap of less than 80% and more than 5%, wherein the luminescent substances have different individual decay times ($\tau$) in the primary emission range, wherein the individual decay times ($\tau$) of the luminescent substances differ from each other by more than 50% with reference to the shortest individual decay time.

**Revendications**

1. Document de valeur ayant un marquage de sécurité sous forme d'au moins deux substances luminescentes anorganiques dont les spectres d'émission se chevauchent partiellement dans une zone primaire d'émission, cependant que les spectres d'émission présentent un degré de chevauchement inférieur à 80 % et supérieur à 5 %, cependant que les substances luminescentes présentent dans la zone primaire d'émission différents temps individuels de décroissance ($\tau$), cependant que les temps individuels de décroissance ($\tau$) des substances luminescentes se différencient de plus de 50 % entre eux relativement au temps individuel de décroissance le plus court.

**2.** Document de valeur selon la revendication 1, dans lequel les spectres d'émission des substances luminescentes présentent un degré de chevauchement inférieur à 65 %, en particulier inférieur à 50 %, et/ou supérieur à 10 %, en particulier supérieur à 20 %.

**3.** Document de valeur selon la revendication 1 ou 2, dans lequel des maxima d'intensité directement adjacents de deux substances luminescentes différentes se différencient entre eux de moins de 200 nm, en particulier de moins de 100 nm, et sont éloignés entre eux de plus de 20 nm, en particulier de plus de 50 nm.

**4.** Document de valeur selon une des revendications de 1 à 3, dans lequel les temps individuels de décroissance ($\tau$) des substances luminescentes se différencient entre eux de plus de 75 %, en particulier d'au moins 100 %, relativement au temps individuel de décroissance le plus court.

**5.** Document de valeur selon une des revendications de 1 à 4, dans lequel les temps individuels de décroissance ($\tau$) des substances luminescentes sont compris entre 50 $\mu$s et 5000 $\mu$s, en particulier entre 100 $\mu$s et 1000 $\mu$s, cependant qu'en particulier le temps individuel de décroissance ($\tau$) d'une première substance luminescente est compris entre 100 $\mu$s et 200 $\mu$s, et le temps individuel de décroissance ($\tau$) d'une deuxième substance luminescente est compris entre 400 $\mu$s et 1000 $\mu$s.

**6.** Document de valeur selon une des revendications de 1 à 5, dans lequel une courbe spectrale d'un temps total de décroissance dans la zone primaire d'émission de la combinaison des substances luminescentes présente au moins un minimum et/ou au moins un maximum et/ou au moins un point d'inflexion, en particulier à l'intérieur d'une plage de longueurs d'ondes d'au moins 50 nm, en particulier d'au moins 100 nm.

**7.** Document de valeur selon une des revendications de 1 à 6, dans lequel les substances luminescentes se trouvent dans un rapport de mélange qui est tel que les intensités individuelles intégrées sur la zone primaire d'émission se différencient entre elles de moins de 50 %, en particulier de moins de 30 %, en particulier de moins de 15 %, relativement à l'intensité individuelle intégrée la plus grande des substances luminescentes.

**8.** Document de valeur selon une des revendications de 1 à 7, dans lequel les substances luminescentes sont conçues de telle façon qu'au moins 90 %, en particulier au moins 99 %, de l'émission totale des substances luminescentes est émise au moins dans une zone partielle de la zone primaire d'émission.

**9.** Document de valeur selon une des revendications de 1 à 8, dans lequel les substances luminescentes sont excitables dans la zone primaire d'émission.

**10.** Document de valeur selon une des revendications de 1 à 9, dans lequel les substances luminescentes sont excitables à la même longueur d'ondes, cependant que l'intensité individuelle intégrée de chaque substance luminescente s'élève à au moins 50 % de l'intensité individuelle intégrée maximale de cette substance à excitation optimale.

**11.** Document de valeur selon une des revendications de 1 à 10, dans lequel les substances luminescentes comprennent respectivement un réseau hôte dopé avec au moins un métal des terres rares.

**12.** Document de valeur selon la revendication 11, cependant qu'une première substance luminescente comprend un réseau hôte inorganique dopé à l'ytterbium et/ou au néodyme, et une deuxième substance luminescente comprend un réseau hôte inorganique dopé à l'ytterbium et/ou au néodyme.

**13.** Document de valeur selon la revendication 11 ou 12, dans lequel une teneur totale d'un ou de plusieurs métaux des terres rares dans une première substance luminescente s'élève à moins de 3 pourcent par poids, en particulier à moins de 2 pourcent par poids, et une teneur totale d'un ou de plusieurs métaux des terres rares dans une deuxième substance luminescente s'élève à plus de 5 pourcent par poids, en particulier à plus de 8 pourcent par poids.

**14.** Document de valeur selon une des revendications de 11 à 13, dans lequel au moins une substance luminescente comprend un phosphate de terres rares dopé aux terres rares.

**15.** Document de valeur selon une des revendications de 11 à 14, dans lequel au moins une substance luminescente comprend un phosphate de terres rares dopé à l'ytterbium et/ou au néodyme, cependant que, en particulier, une première substance luminescente comprend un phosphate de terres rares dopé à l'ytterbium et/ou au néodyme, et une deuxième substance luminescente comprend une structure grenat de terres rares dopée à l'ytterbium et/ou au néodyme.

**16.** Document de valeur selon une des revendications de 11 à 14, dans lequel une substance luminescente comprend un niobate, tantalate, vanadate ou tungstate dopé aux terres rares.

**17.** Document de valeur selon une des revendications de 11 à 14 ou 16, dans lequel une substance luminescente comprend un niobate, tantalate, vanadate ou tungstate dopé à l'ytterbium et/ou au néodyme, cependant que, en particulier, une première substance luminescente comprend un niobate, tantalate, vanadate ou tungstate dopé à l'ytterbium et/ou au néodyme, et une deuxième substance luminescente comprend une structure grenat de terres rares dopée à l'ytterbium et/ou au néodyme.

**18.** Procédé d'identification du marquage de sécurité d'un document de valeur selon une des revendications de 1 à 17, lequel comprend les étapes suivantes :

excitation des substances luminescentes par au moins une impulsion d'excitation,
détection d'une intensité totale des rayonnement émis des substances luminescentes au moins dans un canal de détection qui comprend au moins une zone partielle de la zone primaire d'émission, en particulier de la zone de chevauchement,
détermination d'un temps de décroissance ($\tau$) dans le au moins un canal de détection, et
identification du marquage de sécurité sur la base du temps déterminé de décroissance ($\tau$).

**19.** Procédé selon la revendication 18, dans lequel la somme des canaux de détection est donnée pour une zone d'au plus $\pm$ 200 nm, en particulier d'au plus $\pm$ 100 nm, autour d'une longueur d'ondes à laquelle l'intensité spectrale totale des émissions des substances luminescentes dans la zone primaire d'émission présente un point d'inflexion.

**20.** Procédé selon une des revendications 18 ou 19, dans lequel, pour au moins un canal de détection, à au moins deux, de préférence de deux à sept, particulièrement de préférence à exactement deux instants, une intensité de luminescence est déterminée, et un temps de décroissance est déterminé à partir de ces au moins deux intensités.

**21.** Caractéristique de sécurité pour la fabrication d'un document de valeur selon une des revendications de 1 à 17, comprenant au moins deux substances luminescentes anorganiques dont les spectres d'émission se chevauchent partiellement dans une zone primaire d'émission, cependant que les spectres d'émission présentent un degré de chevauchement inférieur à 80 % et supérieur à 5 %, cependant que les substances luminescentes présentent dans la zone primaire d'émission différents temps individuels de décroissance ($\tau$), cependant que les temps individuels de décroissance ($\tau$) des substances luminescentes se différencient de plus de 50 % entre eux relativement au temps individuel de décroissance le plus court.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7762468 B2
- US 2006118741 A1
- US 9046486 B2
- WO 2011106522 A1
- WO 2013033009 A1
- WO 2014095055 A1
- WO 2012003854 A1